# EUROPÄISCHE PATENTSCHRIFT

(11) **EP 3 243 081 B1**
(45) Veröffentlichungstag und Bekanntmachung des Hinweises auf die Patenterteilung: **13.03.2019**
(21) Anmeldenummer: 15826028.1
(22) Anmeldetag: 30.12.2015
(51) Int. Cl.: G01P 21/00, G01C 25/00

(54) **VORRICHTUNG UND VERFAHREN ZUM PRÜFEN EINES INERTIALSENSORS**
DEVICE AND METHOD FOR TESTING AN INERTIAL SENSOR
DISPOSITIF ET PROCÉDÉ POUR TESTER UN CAPTEUR INERTIEL

(30) Priorität: 08.01.2015 DE 102015200164
(43) Veröffentlichungstag der Anmeldung: 15.11.2017
(73) Patentinhaber: Robert Bosch GmbH, 70442 Stuttgart (DE); Spektra Schwingungstechnik Und Akustik GmbH Dresden, 01189 Dresden (DE)
(72) Erfinder: WOOG, Matthias, 01257 Dresden (DE); SCHREIBER, Rainer, 71711 Steinheim (DE); BAUS, Michael, 74321 Bietigheim-Bissingen (DE); OECHSNER, Herbert, 74214 Schoental (DE); BRUCKE, Martin, 01309 Dresden (DE)
(86) Internationale Anmeldenummer: PCT/EP2015/081440
(87) Internationale Veröffentlichungsnummer: WO 2016/110439

(56) Entgegenhaltungen:
- DE-A1-102007 059 857
- US-A- 3 048 997
- US-A1- 2007 295 087

## Beschreibung

Die Erfindung betrifft eine Vorrichtung zum Prüfen eines Inertialsensors, insbesondere Beschleunigungssensor und/oder Drehratensensor, für ein Fahrzeug, der mindestens zwei Anbaustellen aufweist, mit wenigstens einem ersten Schwingkörper, an welchem der Inertialsensor befestigbar/befestigt ist, und mit wenigstens einem ersten dem ersten Schwingkörper zugeordneten Erregermodul zum Beschleunigen des Schwingkörpers in zumindest eine Richtung.

Ferner betrifft die Erfindung ein Verfahren zum Prüfen eines Inertialsensors, insbesondere Beschleunigungssensor und/oder Drehratensensor, für ein Fahrzeug, der mindestens zwei Anbaustellen aufweist, wobei der Inertialsensor an wenigstens einem ersten Schwingkörper befestigt und der Schwingkörper durch wenigstens ein erstes Erregermodul in zumindest eine Richtung beschleunig wird.

### Stand der Technik

Vorrichtungen und Verfahren der eingangs genannten Art sind bekannt. Um für Fahrzeuge vorgesehene Inertialsensoren zu prüfen und einzustellen, werden diese häufig an externen Prüfständen untersucht, um stationär zu ermitteln, wie sich unterschiedliche Beschleunigungen auf den Inertialsensor auswirken. Dadurch ist es möglich, den Inertialsensor derart zu kalibrieren, dass die zu erfassenden Beschleunigungen erfasst und andere Störbeschleunigungen kompensiert oder ignoriert werden. Hierzu ist es bekannt den Inertialsensor an einem Schwingkörper mit hoher Masse, wie beispielsweise ein Metallblock oder dergleichen, zu befestigen und den Schwingkörper durch wenigstens ein Erregermodul in zumindest eine Richtung zu beschleunigen. Die durch den Inertialsensor dabei erfassten oder gemessenen Signale, beispielsweise Beschleunigungen oder Drehraten, werden gespeichert und gegebenenfalls mit erwarteten Beschleunigungswerten zu seiner Kalibrierung abgeglichen. Aus der Offenlegungsschrift DE 10 2007 059 857 A1 ist ein Verfahren zur Vermessung eines Beschleunigungssensors bekannt, wobei der Beschleunigungssensor gegenüber einer ersten und einer zweiten Richtung sensitiv ist. Die Anregung des Beschleunigungssensors erfolgt mittels zweier Linearschwingerreger, wobei die Anregung jeweils durch bewegliche Stößel zwischen Linearschwingerreger und Beschleunigungssensor erfolgt. Die Druckschrift US 3,048,997 A betrifft einen Kalibrator für einen Winkelbeschleunigungssensor. Darüber hinaus geht aus der Offenlegungsschrift US 2007/0295087 A1 ein Verfahren zur Messung einer transversalen Sensitivität eines Beschleunigungssensors hervor.

### Offenbarung der Erfindung

Die erfindungsgemäße Vorrichtung und das erfindungsgemäße Verfahren haben den Vorteil, dass der Inertialsensor an unterschiedlichen Stellen unterschiedlich beschleunigt werden kann. Dadurch ist es möglich, den Anwendungsfall im Fahrzeug noch besser durch die Vorrichtung abzubilden. Häufig ist der Inertialsensor an unterschiedlichen Karosserieelementen eines Kraftfahrzeugs befestigt, die auch zueinander schwingen können. Durch die vorteilhafte Ausbildung der Vorrichtung wird dieses Verhalten dadurch abgebildet, dass der Inertialsensor an zwei unterschiedlichen Stellen unterschiedlich beschleunigbar ist. Erfindungsgemäß ist hierzu vorgesehen, dass wenigstens ein zweiter Schwingkörper beabstandet zu dem ersten Schwingkörper vorgesehen ist, dem wenigstens ein zweites Erregermodul zu seiner Beschleunigung zugeordnet ist, und dass der Inertialsensor mit einer ersten Anbaustelle an dem ersten und mit einer zweiten Anbaustelle an dem zweiten Schwingkörper befestigbar/befestigt ist. Damit ist der Inertialsensor an zwei Anbaustellen beziehungsweise Befestigungsstellen mit unterschiedlichen Schwingkörpern, die insbesondere unabhängig voneinander schwingbar gelagert sind, beschleunigbar. Hierdurch ist es beispielsweise möglich, ein Mitschwingen des zweiten Schwingkörpers bei einem Erregen des ersten Schwingkörpers durch Erfassung und Auswerten der Beschleunigungssignale zu kompensieren.

Bei einem Beispiel, welches nicht unter den Schutzbereich der Ansprüche fällt, ist vorgesehen, dass jedem Schwingkörper wenigstens zwei Erregermodule zugeordnet sind, die derart ausgerichtet/angeordnet sind, den jeweiligen Schwingkörper in unterschiedliche Richtungen zu beschleunigen. Somit ist eine zumindest zweidimensionale Beschleunigung eines jeden Schwingkörpers gewährleistet, wodurch die Untersuchung des Inertialsensors optimierbar ist.

Ferner ist erfindungsgemäß vorgesehen, dass jedem Schwingkörper drei Erregermodule zugeordnet sind, die dazu ausgebildet/ausgerichtet sind, den jeweiligen Schwingkörper in drei unterschiedliche Richtungen zu beschleunigen. Dadurch ist eine dreidimensionale Anregung jedes Schwingkörpers beziehungsweise eine dreidimensionale Beschleunigung jedes Schwingkörpers gewährleistet, wodurch sich insgesamt eine 2x3D-Beschleunigung beziehungsweise Prüfung des Inertialsensors ergibt.

Besonders bevorzugt ist vorgesehen, dass jeweils eine Erregungsrichtung eines Erregermoduls des ersten Schwingkörpers einer Erregerrichtung eines Erregermoduls des zweiten Schwingkörpers entspricht. Dadurch wird gewährleistet, dass beide Schwingkörper durch jeweils ein Erregermodul in die gleiche Erregerrichtung beschleunigt werden können. Insbesondere ist vorgesehen, dass die Erregermodule des ersten Schwingkörpers und die Erregermodule des zweiten Schwingkörpers derart ausgerichtet/angeordnet sind, dass die Schwingkörper jeweils in drei gleiche Raumrichtungen beschleunigt werden können. Dadurch ist eine vorteilhafte Auswertung der Beschleunigungssignale des Inertialsensors möglich.

Gemäß einer bevorzugten Weiterbildung der Erfindung ist vorgesehen, dass die Erregermodule jeweils einen, insbesondere mehrere Piezoaktuatoren aufweisen. Insbesondere ist vorgesehen, dass die Piezoaktuatoren also Piezo-Stacks zusammengeschlossen sind, um gemeinsam den jeweiligen Schwingkörper in die gewünschte Richtung zu beschleunigen. Durch das Vorsehen von Piezo-Stacks können hohe Beschleunigungen und große Verfahrwege beziehungsweise Bewegungen der Schwingkörper realisiert werden. Zweckmäßigerweise weist jedes Erregermodul wenigstens einen Regelsensor auf, der die Ansteuerung der Aktuatoren, insbesondere der Piezoaktuatoren in Abhängigkeit einer gewünschten Beschleunigung beziehungsweise eines Schwingkörpers und/oder des Inertialsensors regeln. Dadurch wird erreicht, dass der Inertialsensor mit einer tatsächlich gewünschten Beschleunigung angeregt und die dabei erfassten Signale des Inertialsensors vorteilhaft ausgewertet werden können.

Das erfindungsgemäße Verfahren mit den Merkmalen des Anspruchs 5 zeichnet sich dadurch aus, dass der Inertialsensor mit einer ersten Anbaustelle an dem ersten Schwingkörper und mit einer zweiten Anbaustelle an einem zweiten Schwingkörper, der von dem ersten Schwingkörper beabstandet, insbesondere unabhängig gelagert, ist, befestigt wird, wobei der zweite Schwingkörper durch wenigstens ein zweites Erregermodul in wenigstens eine Richtung beschleunigt wird. Es ergeben sich hierdurch die bereits genannten Vorteile.

Erfindungsgemäß ist vorgesehen, dass jeder Schwingkörper durch jeweils drei Erregermodule in unterschiedliche Richtungen beschleunigt wird. Insbesondere ist vorgesehen, dass die beiden Schwingkörper in die gleichen Richtungen beschleunigbar sind beziehungsweise beschleunigt werden. Dazu werden die Erregermodule derart an dem jeweiligen Schwingkörper angeordnet, dass jeweils ein Erregermodul des ersten und des zweiten Schwingkörpers in die gleiche Richtung wirken.

Ferner ist bevorzugt vorgesehen, dass die Schwingkörper gleichzeitig oder nacheinander in unterschiedliche oder gleiche Raumrichtungen beschleunigt werden, um das Verhalten des zu prüfenden Inertialsensors zu untersuchen. Besonders bevorzugt wird in Abhängigkeit von der Ansteuerung der Erregermodule und der dadurch erzeugten Beschleunigungen der Schwingkörper eine Übertragungsmatrix erstellt, durch welche Störbeschleunigungen kompensiert werden. Eine durch eine der Erregermodule in eine Richtung erzeugte Beschleunigung kann gleichzeitig auch zu einer Beschleunigung in eine andere Richtung führen, die als Störbeschleunigung erachtet wird. Um diese Störbeschleunigung bei der Untersuchung des Inertialsensors zu vermeiden, ist die Übertragungsmatrix vorgesehen, die derartige Beschleunigungsabweichungen beziehungsweise Störbeschleunigungen kompensiert.

Im Folgenden soll die Erfindung anhand der Zeichnungen näher erläutert werden. Dazu zeigen
- Figuren 1A und 1B: eine Vorrichtung zum Prüfen eines Inertialsensors in unterschiedlichen Ansichten,
- Figur 2: eine schematische Darstellung der Vorrichtung und
- Figuren 3A und 3B: Beschleunigungsverläufe von Regelsensoren.

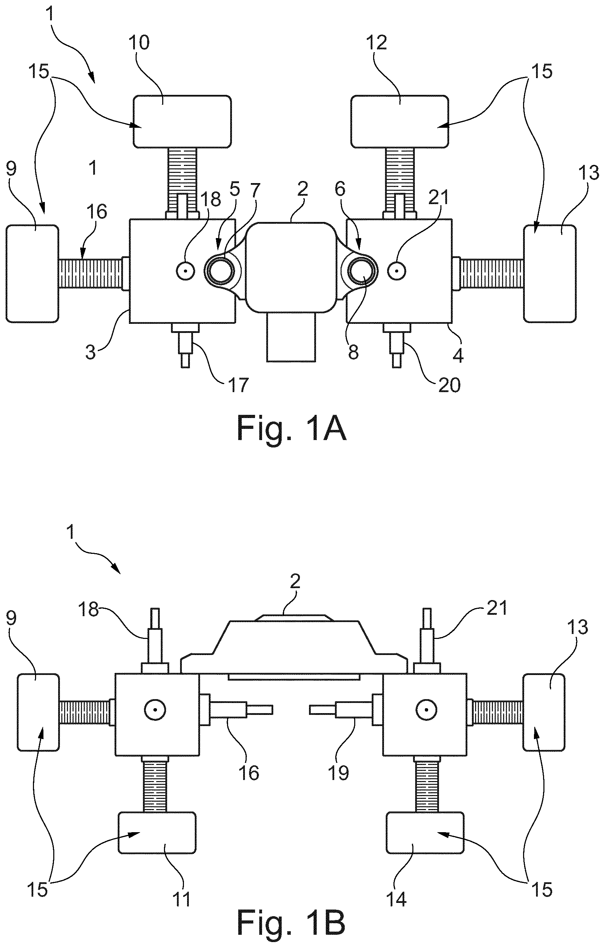

Figuren 1A und 1B zeigen in einer Draufsicht (Figur 1A) und in einer Seitenansicht (Figur 1B) eine Vorrichtung 1 zum Untersuchen eines Inertialsensors 2, der beispielsweise also Beschleunigungssensor und/oder Drehratensensor ausgebildet ist und in Kraftfahrzeugen zum Einsatz kommt.

Die Vorrichtung 1 weist zwei Schwingkörper 3 und 4 auf, die jeweils als Stahlquader ausgebildet sind. Alternativ kann der Stahlquader jedoch auch aus anderen Werkstoffen, beispielsweise aus Wolfram, Keramik, Aluminium oder Beryllium gefertigt sein. Die Schwingkörper 3, 4 sind beabstandet zueinander angeordnet und weisen jeweils eine Befestigungsstelle 5,6 für den Inertialsensor 2 auf. Der Inertialsensor 2 weist zwei Anbaustellen 7, 8 auf, mittels welcher der Inertialsensor 2 an den Schwingkörpern 3, 4 beziehungsweise an deren Befestigungsstellen 5, 6 befestigt ist. Die Anbaustellen 7, 8 sind entsprechend ebenfalls beabstandet zueinander, vorliegend auf zwei gegenüberliegenden Seiten des Inertialsensors 2 beziehungsweise eines Gehäuses des Inertialsensors 2 angeordnet/ausgebildet.

Jedem der Schwingkörper 3, 4 sind drei Erregermodule 9, 10, 11 beziehungsweise 12, 13, 14 zugeordnet. Die Erregermodule 9 bis 14 weisen jeweils als Aktuator mehrere in Reihe geschaltet Piezoaktuatoren auf, die zusammen einen Piezo-Stack 15 bilden. Die Piezo-Stacks sind unabhängig voneinander ansteuerbar, sodass sie unabhängig voneinander den jeweiligen Schwingkörper 3, 4 beschleunigen können. Die Piezo-Stacks 15 der Erregermodule 9 bis 14 sind dabei derart ausgerichtet, dass jeder Schwingkörper 3, 4 in drei unterschiedliche Raumrichtungen beschleunigbar ist. Insbesondere sind die Piezo-Stacks 15 dazu senkrecht zueinander ausgerichtet, sodass die Schwingkörper 3, 4 jeweils in x, y und z-Richtung beschleunigt werden können. Die Erregermodule 9 bis 14 weisen weiterhin jeweils einen Regelsensor 16, 17 und 18 beziehungsweise 19, 20 und 21 auf. Die Regelsensoren 17 bis 21 sind dabei auf jeweils der dem jeweiligen Piezo-Stack des jeweiligen Erregermoduls 9 bis 14 gegenüberliegenden Seite des jeweiligen Schwingkörpers 2, 4 angeordnet. Jedes Erregermodul 9 bis 14 weist dabei außerdem eine Gegenmasse für die jeweiligen Piezo-Stacks auf. Der gesamte Aufbau der Vorrichtung 1 ist lose und vorzugsweise spannungsfrei auf beispielsweise Schaumstoff gelagert. An Stelle von drei Regelsensoren kann auf jedem Schwingkörper 3, 4 auch ein einzelner 3D-Beschleunigungssensor angeordnet beispielsweise angeklebt sein.

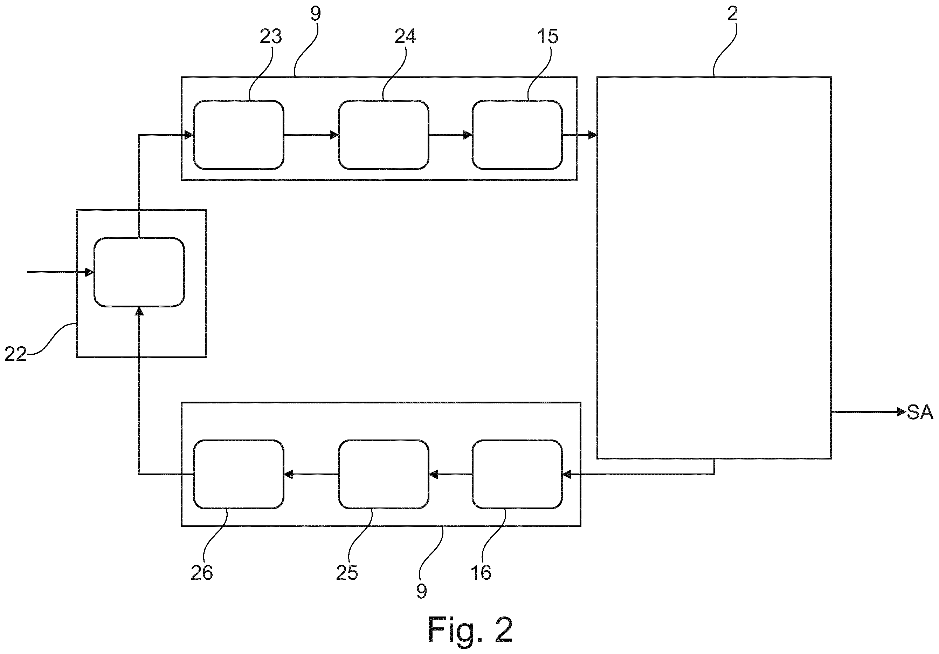

Figur 2 zeigt eine schematische Darstellung der Vorrichtung 1. Ein Steuergerät 22 steuert die Piezoaktuatoren beziehungsweise die Erregermodule 9 bis 14 an. Dazu sendet das Steuergerät 22 ein Signal beispielsweise an das Erregermodul 9. Dieses weist einen Digital-Analog-Wandler 23 auf, der einem Verstärker 24 vorgeschaltet ist, welcher wiederum mit dem Piezo-Stack des Erregermoduls 9 zu dessen Ansteuerung verbunden ist. Der Inertialsensor 2 wird durch die erzeugte Beschleunigung angeregt und ein Ausgangssignal SA des Inertialsensors 2 wird gemessen. Gleichzeitig erfasst der Regelsensor 16 des Erregermoduls 9 die von dem Piezo-Stack 15 tatsächlich erzeugte Beschleunigung, führt diese einem Verstärker 25 zu, der einem Analog-DigitalWandler 26 vorgeschaltet ist, welcher wiederum ein Ausgangssignal an das Steuergerät 22 sendet. Durch diese Rückkopplung lassen sich auf den jeweiligen Schwingkörper 3, 4 beziehungsweise auf den Inertialsensor 2 gewünschte Beschleunigungen sehr präzise ausüben.

Mit der Vorrichtung können Echtzeitsignale, die an der Anbaustelle des Inertialsensors in einem Fahrzeug gemessen wurden, im Labor stationär reproduziert werden. Die Signale werden durch die zwei Einheiten aus Schwingkörper und jeweils drei Erregermodulen beispielsweise bei Testfahrten mit dem Kraftfahrzeug auf verschieden Versuchsstrecken ermittelt. Durch die Vorrichtung können an beiden Anbaustellen des Inertialsensors 2 für jede der drei Raumrichtungen unterschiedliche Signale eingespeist werden. Rückkopplungen der jeweils anderen Anregungsrichtungen können durch die vorteilhafte Vorrichtung kompensiert werden. Durch die Nachbildung der im Fahrzeug gemessen Beschleunigungssignale können erstmals unterschiedliche Muster mit vergleichbarer Anregung geprüft werden. Durch die vorteilhafte Vorrichtung 1 ist damit eine deutliche Kostenersparnis durch den Verzicht auf aufwendige Fahrzeugmessungen erreicht. Darüber hinaus ergibt sich auch eine Zeitersparnis beim Vergleich der Empfindlichkeit des Inertialsensors 2, beispielsweise bei verschiedenen Musterständen oder Unterschieden in der Aufbau- und Verbindungstechnik.

Die im Fahrzeug gemessenen Beschleunigungssignale an den Anbaustellen des Inertialsensors 2 werden von der Regelsoftware des Steuergeräts 22 eingelesen. Durch Multiplikation mit einer komplexen Übertragungsmatrix im Frequenzbereich wird durch die Regelsoftware das erforderliche Ausgangssignal für die einzelnen Piezo-Stacks 15 berechnet. Einflüsse der Querrichtungen können durch die Bestimmung der Übertragungsmatrix kompensiert werden.

Zum Bestimmen der komplexen Übertragungsfunktion werden nacheinander an den Erregermodulen 9 bis 14 Probesignale angelegt, während alle anderen Erregermodule ein Nullsignal erhalten, die resultierende Beschleunigung wird an allen Regelsensoren gemessen. Die Probesignale und Sensorsignale werden in den Frequenzbereich transformiert und dann dividiert (Matrixdivision). Das Ergebnis ist eine quadratische Matrix von komplexen Übertragungsfunktionen, die die Übertragungsmatrix ergibt. Jeder Eintrag in der Matrix entspricht einer komplexen Übertragungsfunktion von einem Erreger zu einem Sensor mit x-Frequenzlinien. Die ausgewählten Sollsignale werden in den Frequenzbereich transformiert und bilden den komplexen Sollvektor. Nun ist ein Algorithmus vonnöten, der aus den gegebenen Werten das Ausgabesignal für die Erreger so berechnet, dass die Beschleunigung am Prüfling möglichst gut dem aufgezeichneten Sollverlauf entspricht. Dazu wird der Sollvektor mit der inversen Übertragungsmatrix multipliziert. Das Ergebnis ist ein Vektor von komplexen Ausgabesignalen im Frequenzbereich. Der Ausgabevektor wird in den Zeitbereich transformiert und ausgegeben. Gleichzeitig werden die Beschleunigungssignale an den Sensoren 17 bis 21 aufgezeichnet und angezeigt.

Für die Auswertung werden drei Betriebsarten bereitgestellt: Im Straight-Verfahren werden die Daten unverändert auf den Schwingerreger beziehungsweise das jeweilige Erregermodul geleitet. Dies dient ausschließlich zu Vergleichszwecken. Im Single-Verfahren erfolgt für jeden Kanal separat eine eindimensionale Verarbeitung der Daten entsprechen der ersten Stufe des Algorithmus des bewährten Chart-Programms ohne Berücksichtigung der gegenseitigen Beeinflussung der Kanäle. Damit können mit dem gegebenen Aufbau Korrelationen bis 0,95 erzielt werden. Unter komplizierten Bedingungen erweist sich das Verfahren wegen der einfachen Mathematik als besonders robust. Das Matrixverfahren verwendet hingegen den oben genannten Algorithmus, wobei sich dadurch entscheidende Verbesserungen mit Kombinationen > 0,995 erzielen lassen.

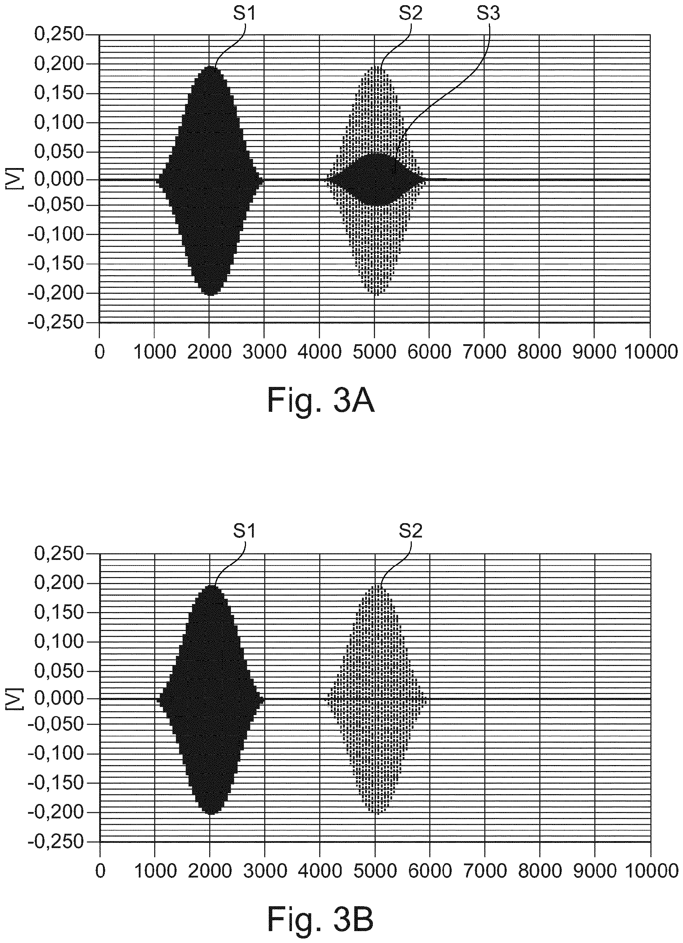

Figuren 3A und 3B zeigen jeweils den Beschleunigungsverlauf auf zwei Achsen der Vorrichtung 3. In Figur 3A werden zwei Erregermodule, beispielsweise Erregermodule 9 und 10, zeitversetzt mit je einem Sinus-Burst mit 200 kS/s angeregt (x-Achse 8 kHz, y-Achse 10 kHz). Mit S1 ist hierbei die durch den ersten Sinus-Burst mit dem entsprechenden Regelsensor erfasste Beschleunigung dargestellt, und mit S2 die durch den zweiten Sinus-Burst mit dem entsprechenden Regelsensor erfasste Beschleunigung. Es zeigt sich, dass mit dem zweiten Sinus-Burst S2 ein Mitschwingen der x-Achse (S3) verursacht wird.

Figur 3B zeigt das Ergebnis, wenn das zuvor beschriebene Matrixverfahren mit der komplexen Übertragungsmatrix verwendet wird. Das Übersprechen beziehungsweise Mitschwingen der x-Achse wird vollständig eliminiert. Dazu wird der Piezo-Stack (Kanal 0) der einen Achse derart angesteuert, dass er ein gegenläufiges Ausgangssignal mit der Frequenz von dem Mitschwinger (Kanal 1) und genau der richtigen Amplitude und Phase erzeugt, um die unerwünschte Querschwingung auszugleichen.

Mittels der Übertragungsmatrix und der Vorrichtung 1 lässt sich somit eine hohe Übereinstimmung zwischen Soll- und Istverlauf von Beschleunigungen in sechs Achsen realisieren. Als Probesignale werden beispielsweise Sinus-Burst, Rauschsignale, real aufgezeichnete Schockverläufe oder gegenläufige Sinus-Sweeps ausgegeben.

Wie bereits erwähnt wird der Soll-Verlauf Xs(t) per Fourier-Transformation in den Frequenzbereich transformiert und mit der invertierten komplexen Übertragungsfunktion H(f) multipliziert. Durch Rücktransformation in den Zeitbereich per inverser Fourier-Transformation wird das erforderliche Ausgabesignal Xo(t), das als Spannungsverlauf an den jeweiligen Piezo-Erreger ausgegeben wird, erhalten. Danach wird das gemessene Beschleunigungssignal Xi(t) mit dem Sollverlauf verglichen und nach einem bestimmen Verfahren ein weiterer iterativer Abgleich durchgeführt. Unter optimalen Bedingen werden so in der Praxis Korrelationen von > 0,999 zwischen Xi und Xs erreicht. Entscheidet ist dabei die exakte Bestimmung der Übertragungsfunktion. Bei mehrdimensionaler Anregung entsteht bei nicht idealen Schwingerregern eine gegenseitige Beeinflussung der Beschleunigungen durch beispielsweise Querschwingungen der Erreger, mechanische Kopplungen an dem Inertialsensor 2, Querempfindlichkeit der Sensoren oder durch den Lasteinfluss des zu prüfenden Inertialsensors 2. Durch die Vorrichtung werden die genannten Einflüsse zumindest weitgehend eliminiert. Dazu wird das dynamische Verhalten eines N-dimensionalen Aufbaus genau vermessen und eine komplexe Übertragungsmatrix H erstellt.

H 00(f) ist beispielsweise die Übertragungsfunktion des Erregermoduls 9, zwischen dessen Piezo-Stack 15 und dem zugeordneten Regelsensor 16 (zum Beispiel x-Richtung). H 01(f) ist dann die Übertragungsfunktion zwischen dem Piezo-Stack 15 des Erregermoduls 9 und dem Regelsensor 17 (zum Beispiel x-> y-Richtung).

H 00(f) und H 11(f) bilden hier die Hauptdiagonale der Matrix und entsprechen der Übertragung zwischen dem Erreger je einer Richtung und dem zugehörigen Sensor derselben Richtung, während H 01(f) und H 10(f) die Quereinflüsse charakterisieren. Erster Ansatz zur Lösung ist die Berechnung nach dem Verfahren des Chart-Programms für jede Richtung, das heißt x-Erreger + x-Sensor, y-Erreger + y-Sensor, z-Erreger + z-Sensor. Dabei werden nur die Elemente der Hauptdiagonale der Matrix verwendet und die Quereinflüsse bleiben unberücksichtigt. Dieses sogenannte Single-Verfahren wird jedoch bei mehrdimensionaler Erregung durch gegenseitige Beeinflussung weniger genau. Durch das beschriebene Matrixverfahren wird für jede Frequenzlinie ein N-dimensionales Gleichungssystem gelöst: Die N-Sollsignale bilden einen Sollvektor Xs (1, N). das Übertragungsverhalten wird durch eine quadratische Übertragungsmatrix H(N, N) charakterisiert. Der Ausgangvektor Xo (N, 1) wird durch Lösung des N-dimensionalen Gleichungssystems ermittelt. Die Berechnung erfolgt naturgemäß im komplexen Frequenzbereich, einzeln für jede Frequenzlinie. Wie beim Chart-Verfahren erfolgt für jeden Ausgangskanal per inverser Fourier-Transformation eine Überführung in den Zeitbereich.

## Patentansprüche

1. Vorrichtung (1) zum Prüfen eines Inertialsensors (2) für ein Fahrzeug, der mindestens zwei Anbaustellen (7, 8) aufweist, mit wenigstens einem erstenSchwingkörper (3, 4), an welchem der Inertialsensor (2) befestigbar ist und mit wenigstens einem ersten dem ersten Schwingkörper (3, 4) zugeordneten Erregermodul (9-11) zum Beschleunigen des ersten Schwingkörpers (3, 4) in zumindest eine Richtung,und wobei wenigstens ein zweiter Schwingkörper (4) beabstandet zu dem ersten Schwingkörper (3) vorgesehen ist, dem wenigstens ein zweites Erregermodul (12-14) zu seiner Beschleunigung zugeordnet ist, und wobei der Inertialsensor (2) mit einer ersten Anbaustelle (7) an dem ersten Schwingkörper (3) und mit einer zweiten Anbaustelle (8) an dem zweiten Schwingkörper (4) befestigbar ist, **dadurch gekennzeichnet, dass** jedem Schwingkörper (3, 4) drei Erregermodule (9-14) zugeordnet sind, die dazu ausgebildet sind, den jeweiligen Schwingkörper (3, 4) in unterschiedliche Richtungen unabhängig voneinander zu beschleunigen.

2. Vorrichtung nach einem der vorhergehenden Ansprüchen, **dadurch gekennzeichnet, dass** jeweils eine Beschleunigungsrichtung eines Erregermoduls (9-11) des ersten Schwingkörpers (3) einer Beschleunigungsrichtung eines Erregermoduls (12-14) des zweiten Schwingkörpers (4) entspricht.

3. Vorrichtung nach einem der vorhergehenden Ansprüchen, **dadurch gekennzeichnet, dass** die Erregermodule (9-14) jeweils wenigstens ein, insbesondere mehrere Piezoaktoren (15) aufweisen.

4. Vorrichtung nach einem der vorhergehenden Ansprüchen, **dadurch gekennzeichnet, dass** die Erregermodule (9-14) jeweils wenigstens einen Regelsensor (16-21) aufweisen.

5. Verfahren zum Prüfen eines Inertialsensors für ein Fahrzeug, der mindestens zwei Anbaustellen (7, 8) aufweist, wobei der Inertialsensor (2) an wenigstens einem ersten Schwingkörper (3) befestigt und der Schwingkörper (3) durch wenigstens ein erstes Erregermodul (9-12) in zumindest eine Richtung beschleunigt wird, und wobei der Inertialsensor (2) mit einer ersten Anbaustelle (7) an dem ersten Schwingkörper (3) und mit einer zweiten Anbaustelle (8) an einem von dem ersten Schwingkörper (3) beabstandeten zweiten Schwingkörper (4) befestigt wird, wobei der zweite Schwingkörper (4) durch wenigstens ein zweites Erregermodul (12-14) in zumindest eine Richtung beschleunigt wird, **dadurch gekennzeichnet, dass** jeder Schwingkörper (3, 4) durch jeweils drei Erregermodule (9-14) in unterschiedliche Richtungen unabhängig voneinander beschleunigt wird.

6. Verfahren nach Anspruch 5, **dadurch gekennzeichnet, dass** die Schwingkörper (3, 4) gleichzeitig oder nacheinander in unterschiedliche oder gleiche Raumrichtungen beschleunigt werden.

7. Verfahren nach einem der Ansprüche 5 oder 6, **dadurch gekennzeichnet, dass** in Abhängigkeit von der Ansteuerung der Erregermodule (9-14) und der dadurch erzeugten Beschleunigungen eine Übertragungsmatrix erzeugt wird, durch welche Störbeschleunigungen kompensiert werden.

## Claims

1. Apparatus (1) for testing an inertial sensor (2) for a vehicle, having at least two attachment locations (7, 8), having at least one first vibration body (3, 4) to which the inertial sensor (2) is attachable and having at least one first exciter module (9-11), which is assigned to the first vibration body (3, 4), for accelerating the first vibration body (3, 4) in at least one direction, and wherein provision is made of at least one second vibration body (4), which is located at a distance from the first vibration body (3) and which is assigned at least one second exciter module (12-14) for the acceleration thereof, and wherein the inertial sensor (2) is attachable to the first vibration body (3) by way of a first attachment location (7) and to the second vibration body (4) by way of a second attachment location (8), **characterized in that** each vibration body (3, 4) is assigned three exciter modules (9-11) which are configured to accelerate the respective vibration body (3, 4) in different directions independently from one another.

2. Apparatus according to one of the preceding claims, **characterized in that** in each case an acceleration direction of an exciter module (9-11) of the first vibration body (3) corresponds to an acceleration direction of an exciter module (12-14) of the second vibration body (4).

3. Apparatus according to one of the preceding claims, **characterized in that** the exciter modules (9-14) each have at least one, in particular a plurality of, piezo actuators (15).

4. Apparatus according to one of the preceding claims, **characterized in that** the exciter modules (9-14) each have at least one control sensor (16-21).

5. Method for testing an inertial sensor for a vehicle having at least two attachment locations (7, 8), wherein the inertial sensor (2) is attached to at least one first vibration body (3) and the vibration body (3) is accelerated in at least one direction by at least one first exciter module (9-12), and wherein the inertial sensor (2) is attached to the first vibration body (3) by way of a first attachment location (7) and to a second vibration body (4), which is located at a distance from the first vibration body (3), by way of a second attachment location (8), wherein the second vibration body (4) is accelerated in at least one direction by at least one second exciter module (12-14), **characterized in that** each vibration body (3, 4) is accelerated in different directions independently from one another by in each case at least three exciter modules (9-14).

6. Method according to Claim 5, **characterized in that** the vibration bodies (3, 4) are accelerated simultaneously or successively in different or the same spatial directions.

7. Method according to either of Claims 5 and 6, **characterized in that**, in dependence on the actuation of the exciter modules (9-14) and on the accelerations caused thereby, a transfer matrix is produced, by way of which disturbing accelerations are compensated.

## Revendications

1. Dispositif (1) de test d'un capteur inertiel (2) qui est destiné à un véhicule et qui comporte au moins deux positions de montage (7, 8), le dispositif comprenant au moins un premier corps oscillant (3, 4), auquel le capteur inertiel (2) peut être fixé, et au moins un premier module d'excitation (9 à 11) associé au premier corps oscillant (3, 4) et destiné à accélérer le premier corps oscillant (3, 4) dans au moins une direction, et au moins un deuxième corps oscillant (4), espacé du premier corps oscillant (3), étant prévu auquel est associé au moins un deuxième module d'excitation (12-14) destiné à l'accélérer, et le capteur inertiel (2) pouvant être fixé au premier corps oscillant (3) à une première position de montage (7) et au deuxième corps oscillant (4) à une deuxième position de montage (8), **caractérisé en ce que** chaque corps oscillant (3, 4) est associé à trois modules d'excitation (9 à 14) qui sont conçus pour accélérer le corps oscillant respectif (3, 4) dans différentes directions indépendamment les uns des autres.

2. Dispositif selon l'une des revendications précédentes, **caractérisé en ce que** une direction d'accélération d'un module d'excitation (9 à 11) du premier corps oscillant (3) correspond à une direction d'accélération d'un module d'excitation (12 à 14) du deuxième corps oscillant (4).

3. Dispositif selon l'une des revendications précédentes, **caractérisé en ce que** les modules d'excitation (9 à 14) comportent chacun au moins un actionneur piézoélectrique, en particulier une pluralité d'actionneurs piézoélectriques (15).

4. Dispositif selon l'une des revendications précédentes, **caractérisé en ce que** les modules d'excitation (9 à 14) comportent chacun au moins un capteur de régulation (16 à 21).

5. Procédé de test d'un capteur inertiel qui est destiné à un véhicule et qui comprend au moins deux positions de montage (7, 8), le capteur inertiel (2) étant fixé à au moins un premier corps oscillant (3) et le corps oscillant (3) étant accéléré dans au moins une direction par au moins un premier module d'excitation (9 à 12), et le capteur inertiel (2) étant fixé au premier corps oscillant (3) à une première position de montage (7) et à un deuxième corps oscillant (4), espacé du premier corps oscillant (3), à une deuxième position de montage (8), le deuxième corps oscillant (4) étant accéléré dans au moins une direction par au moins un deuxième module d'excitation (12 à 14), **caractérisé en ce que** chaque corps oscillant (3, 4) est accéléré par trois modules d'excitations (9-14) dans des directions différentes indépendamment les uns des autres.

6. Procédé selon la revendication 5, **caractérisé en ce que** les corps oscillants (3, 4) sont accélérés simultanément ou successivement dans des directions spatiales différentes ou identiques.

7. Procédé selon l'une des revendications 5 ou 6, **caractérisé en ce que**, en fonction de la commande des modules d'excitation (9 à 14) et des accélérations générées par ceux-ci, une matrice de transmission est générée qui permet de compenser des accélérations parasites.
